# EUROPEAN PATENT SPECIFICATION

(11) **EP 2 059 462 B1**
(45) Date of publication and mention of the grant of the patent: **01.08.2012**
(21) Application number: 07748232.1
(22) Date of filing: 11.06.2007
(51) Int. Cl.: B65F 5/00

(54) **WASTE COLLECTION AND TEMPORARY STORAGE FACILITY**
MÜLLSAMMEL- UND TEMPORÄRE LAGEREINRICHTUNG
INSTALLATION DE RÉCUPÉRATION DE DÉCHETS ET DE STOCKAGE TEMPORAIRE

(43) Date of publication of application: 20.05.2009
(73) Proprietor: Envac AB, 117 84 Stockholm (SE)
(72) Inventor: EKHOLM, Magnus, S-431 62 Mölndal (SE)
(74) Representative: Hedman, Anders
(86) International application number: PCT/SE2007/000569
(87) International publication number: WO 2008/153448

(56) References cited:
- EP-A1- 0 093 825
- EP-A1- 0 127 596
- WO-A1-03/057603
- WO-A1-2005/084509
- WO-A1-2006/135296
- US-A- 5 934 576

## Description

### TECHNICAL FIELD

The present invention generally relates to waste collection temporary storage facility for a vacuum operated waste collection system, according to the preamble of claim 1.

### BACKGROUND

Today, vacuum operated waste collection systems are frequently used for collecting mainly domestic or office waste in residential or business areas, but also for collecting hospital waste etc. In such systems, deposited waste is transported in a pipe system by air flow. In particular, the deposited waste is sucked from separate, spaced deposit or collection points and either to a central collection station - in what is normally referred to as a stationary system - or to a vacuum truck - in what is referred to as a mobile system. In line with a continuing demand for increased waste volumes to be managed in such systems, it has been common for several years to increase the temporary storage capacity at the deposit points by providing waste storage tanks or containers. With the use of such waste storage tanks the manageable waste volumes may be increased without shortening the emptying intervals for the individual deposit points, or, in the relevant case, including an increased number of deposit points in a system.

Several different types of tanks have been used for such temporary waste storage, such as the presently mostly preferred steel tank. However, problems are experienced with today's temporary storage tanks, not least in systems where the collection point tanks are placed underground. In such situations it is necessary to provide an easily accessible service space for servicing and repairing auxiliary equipment, such as valves, level sensors and other control means that are present at the tank, as well as parts of the actual tank. To accomplish this, the tanks, such as the mentioned steel tanks, have been provided in a surrounding underground structure to provide sufficient service space allowing service personnel to access the equipment and/or the tank. It has been common to use plastic cisterns for this purpose, but water penetration problems have been reported in association therewith. This may cause problems in modem waste collection system where more and more sophisticated control systems containing moisture sensitive control equipment are used to provide secure and cost as well as time effective emptying of the tanks. Another major concern is the significant production cost as well as installation time and cost per unit of storage volume for such cistern and tank combinations.

A waste collection and temporary storage facility according to the preamble of claim 1 is disclosed in WO-A-2005/084509. This document concerns a container for use at a centralized waste collection station, as opposed to the above discussed localized collection point tanks. The container has an inner wall separating a machine space containing a vacuum source etc. from an actual waste collection volume. The waste collection volume contains a movable plate that serves exclusively to compact collected waste. Lacking any kind of waste transporting or emptying means the container is equipped with the traditional type of opening rear wall. Through this rear wall the container collection volume is emptied and accessed for cleaning and service. With this configuration, the container waste volume can not be emptied by vacuum and the container cannot be employed in underground applications.

Recently, we have developed a temporary waste storage tank that includes a waste agitating and/or feeding means for allowing secure waste discharge even from larger sized tanks. To support such an agitator the tanks have been manufactured from a rigid material such as steel and, on account of i.e. the agitator and a drive unit therefore they have an even larger demand for service space and accessibility for repair.

### SUMMARY

It is a general object of the present invention to suggest improvements enabling enhanced cost efficiency in connection with deposited waste collection points in vacuum operated waste collection systems.

In particular it is an object of the invention to suggest an improved waste collection and temporary storage facility for vacuum waste collection systems, providing secure operation and excellent service accessibility at competitive manufacturing as well as installation cost.

These and other objects are met by the invention as defined by claim1.

To achieve the above stated objects, the invention provides a waste collection and temporary storage facility for waste collection systems of the kind wherein waste deposited in the system is collected and temporarily stored in a facility including a waste storage tank having a waste collection volume, a waste agitating means in the collection volume and a service space separate from said tank waste collection volume, whereby a base structure delimits the waste collection volume as well as the service space and a divider wall forms an end wall of the tank separating the waste collection volume from the service space. Briefly, in such systems, considerably enhanced cost efficiency for a high service level storage facility is achieved by attaching a first divider wall to the base structure inside to delimit an outlet service space therein containing a tank outlet section for connection to a waste collection system transport pipe and an outlet valve.

In one embodiment of the invention the storage facility is a completely prefabricated unit comprising an integrally cast base structure.

In yet another embodiment of the invention the base structure of the facility consists of concrete.

Preferred further developments of the basic inventive idea as well as embodiments thereof are specified in the dependent subclaims.

Advantages offered by the present invention, in addition to those described above, will be readily appreciated upon reading the below detailed description of embodiments of the invention.

### BRIEF DESCRIPTION OF THE DRAWINGS

The invention, together with further objects and advantages thereof, will be best understood by reference to the following description taken together with the accompanying drawings, in which:
- Fig. 1: is a schematical and partly sectioned illustration of an example of a prior art temporary waste storage tank unit;
- Fig. 2: is a schematical and partly sectioned illustration of the use of a basic embodiment of a waste collection and temporary storage facility according to the invention ;
- Fig. 3: is a schematical top perspective view of a first practical embodiment of a waste collection and temporary storage facility according to the invention;
- FIG. 4A: is a top view of the facility of Fig. 3, with the lid removed;
- FIG. 4B: is a side view of the facility of Fig. 4A, likewise with the lid removed;
- FIG. 4C: is an end view of the facility of Figs. 4A-B;
- Fig. 5: is a partly schematical, longitudinal section through the facility of Figs. 4A-C as installed in a general waste collection system; and
- Fig. 6: is an exploded perspective view illustrating assembly of a second practical embodiment of a waste collection and temporary storage facility according to the invention.

### DETAILED DESCRIPTION

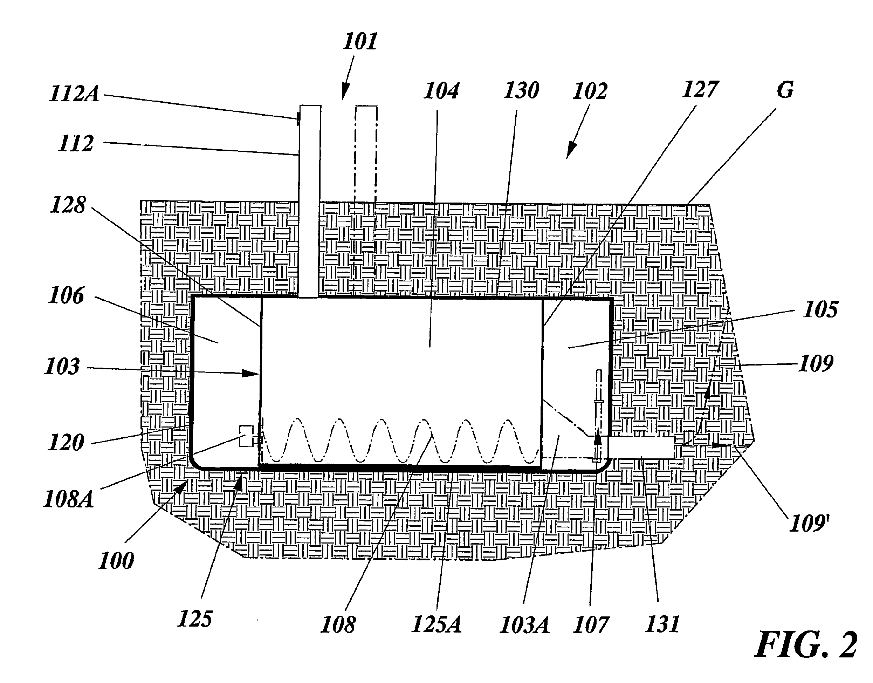

The invention will now be explained with reference to exemplifying embodiments of the waste collection and temporary storage facility of the invention, which are illustrated in the accompanying drawing figures 2-6. The illustrated exemplifying embodiments relate to the application of the inventive solution to a waste collection system containing an underground temporary waste storage tank of the type having an agitator means in the shape of a screw. It shall be emphasized, though that the illustrations are for the purpose of describing a preferred embodiment of the invention and are not intended to limit the invention to the details thereof.

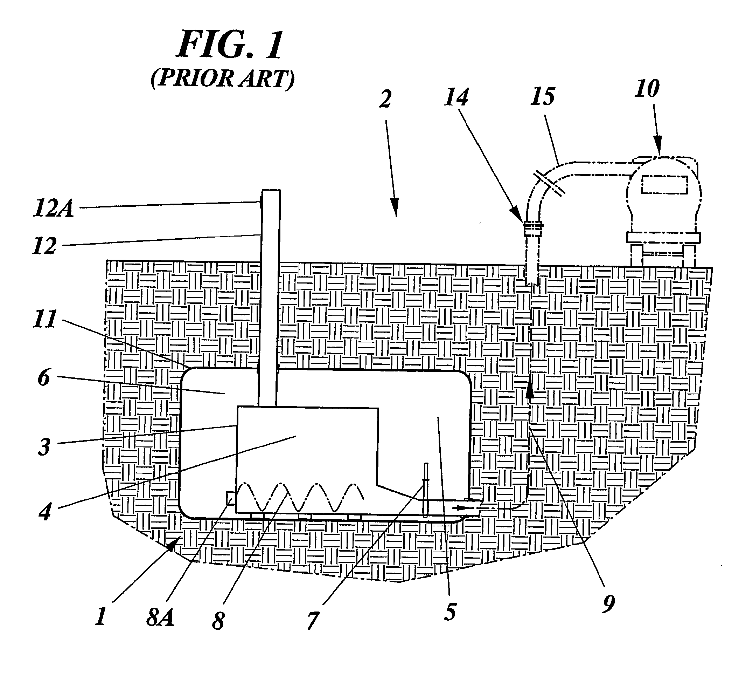

Fig. 1 illustrates an example of a partially and very schematically outlined conventional vacuum waste collection system 2 with the above mentioned, presently used type of waste collection point 1. Specifically, in Fig. 1 is illustrated a vacuum operated waste collection system 2 of the mobile type having an underground temporary storage tank 3. In such a system, waste is deposited through opening waste inlets 12A provided in one or several waste chutes 12 communicating with an upper part of the tank 3. The deposited waste is temporarily collected in the storage tank 3 at the waste collection point 1 and is emptied therefrom using a vacuum truck 10. The truck 10 carries a vacuum source (not specifically designated) connected to a movable and normally partly flexible waste pipe 15. At a docking station 14 the waste pipe 15 is connectable to a stationary pipe system 9 that through a controlled waste discharge valve 7 communicates with the interior tank volume 4 of the steel tank 3.

In such a conventional application the temporary waste storage tank 3, here illustrated as the initially discussed "screw agitator tank", is accommodated inside an underground plastic or concrete cistern 11 that completely surrounds the tank 3. With this configuration, service spaces 5, 6 are formed inside the cistern 11, surrounding the tank 3. These spaces 5, 6 are provided to allow service and repair of a tank outlet, the discharge valve 7, actuator means and possibly other control equipment therefore and of a drive unit 8A and possibly control equipment for the agitator 8, respectively. Such a conventional tank 3 and cistern 11 combination is not very space efficient with regard to the waste storage volume obtained in relationship to the total cistern volume. This in turn implies that to obtain a specified storage volume, a comparatively large cistern will have to be manufactured, requiring also a correspondingly large excavation in the ground. Accordingly, for such known configurations, the manufacturing, excavation and installation costs will be quite high per unit of storage volume.

To overcome the above described disadvantages and problems wit the known cistern and tank combination, the present invention suggests a novel design approach for a waste collection and temporary storage facility of a waste collection point intended for use in a vacuum operated waste collection system. The suggested waste collection and temporary storage facility briefly involves integrating the waste storage tank and the service spaces in one and the same base structure and separating them by means of divider walls attached to the base structure. Such a configuration will provide an efficient, practical use of almost the full volume of the base structure, thereby clearly rendering the facility very competitive with regard excavation cost - in underground applications - or general space requirement - in applications above ground - per unit of storage volume. At the same time, since the space inside the base structure is used very effectively, the proposed storage facility configuration will provide an essential reduction of the manufacturing cost for a specified storage volume. The accessibility for service inside the facility and the ease of installation will also be maintained or even improved, compared to existing solutions.

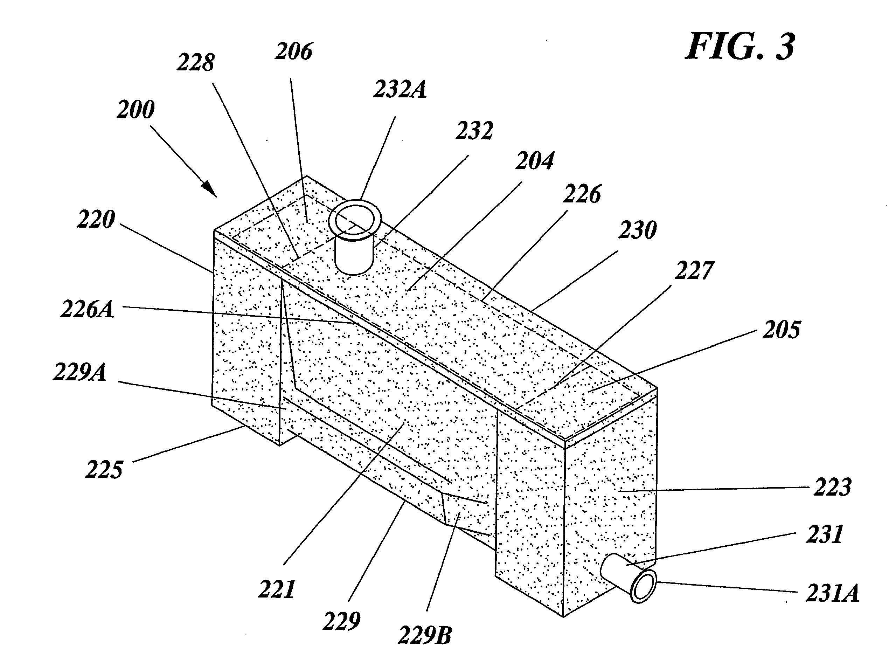

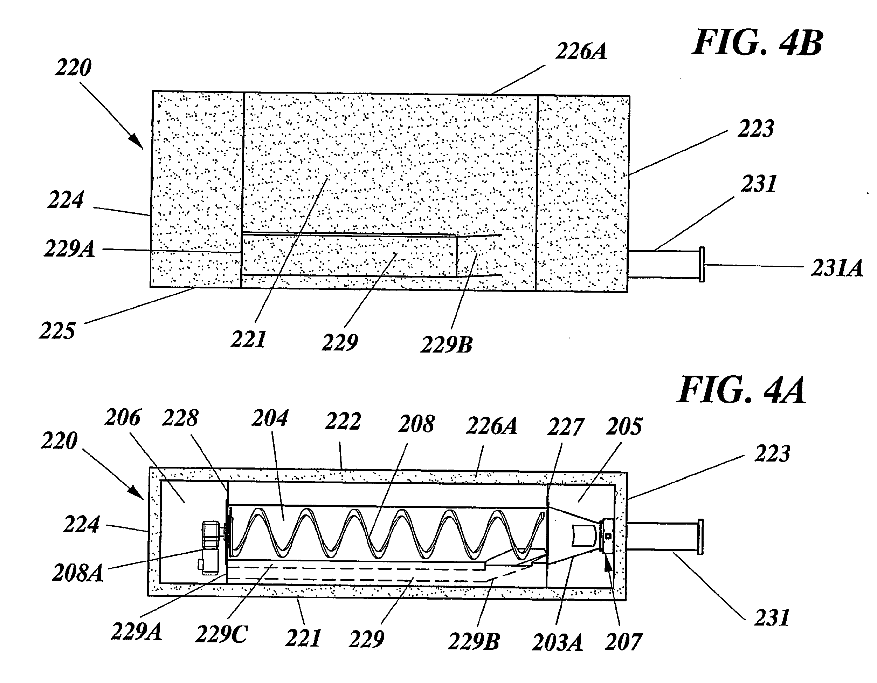

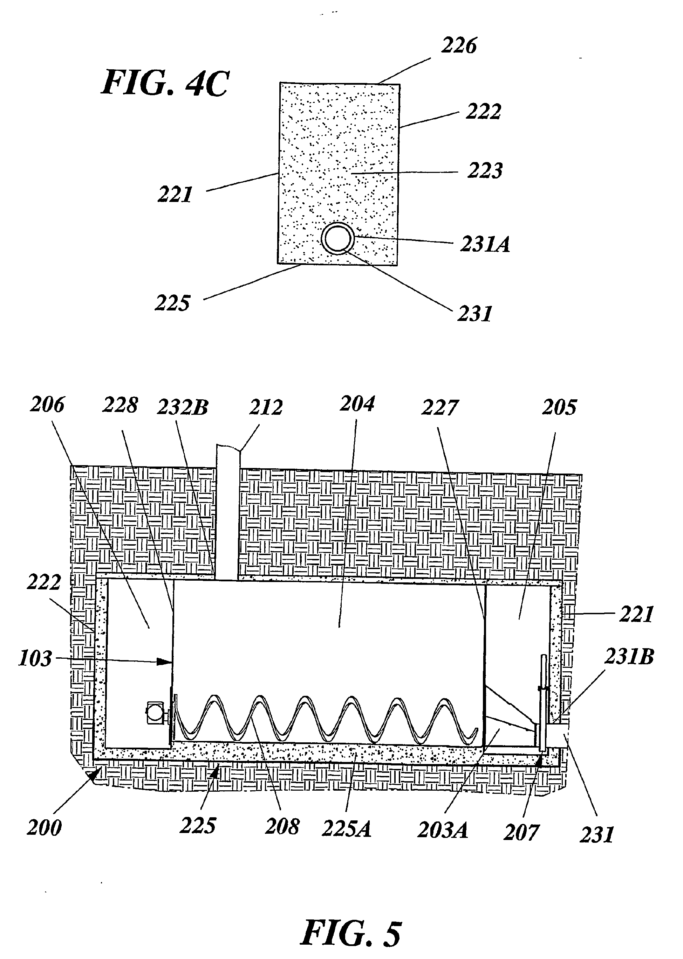

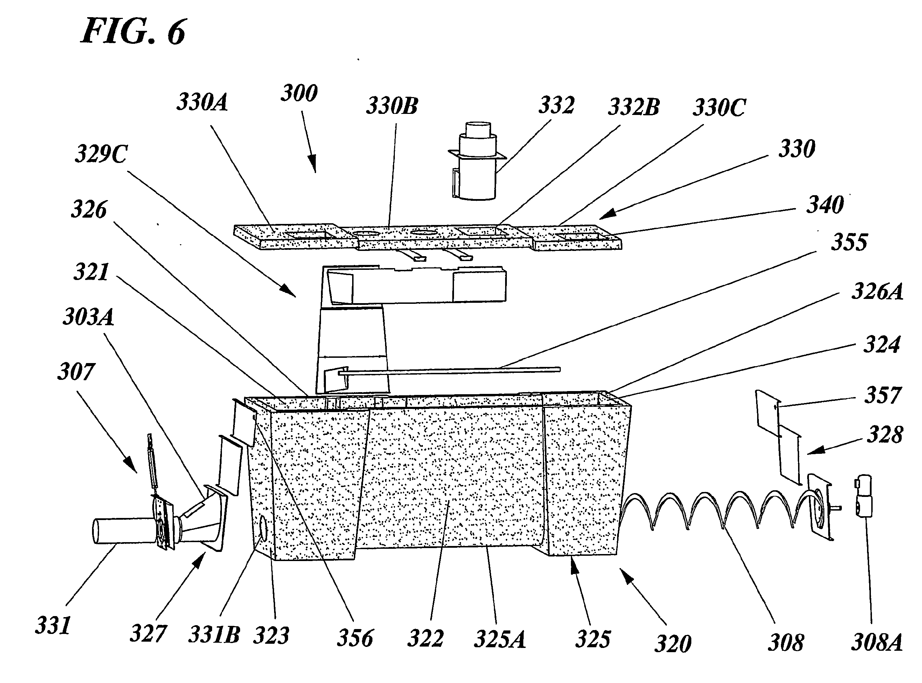

The basic principles of the waste collection and temporary storage facility are illustrated in Fig. 2, whereas a first practical embodiment of an exemplary waste collection and temporary storage facility of the invention is described with reference to Figs. 3-5 and a second practical embodiment of a waste collection and temporary storage facility of the invention are described with reference to Fig. 6. Specifically, Fig. 2 illustrates the use of the inventive configuration in a briefly illustrated vacuum operated waste collection system 102 having a waste collection and temporary storage facility 100 at a waste collection point 101. As described above such a system 102 comprises one or several waste chutes 112 with opening waste inlets 112A for depositing waste, and a fixed transport pipe system 109 or 109' of a mobile or stationary system, respectively, for emptying the waste deposited at the collection point 101. The waste collection and temporary storage facility 100 of the invention is formed by a generally box shaped base structure 120 consisting of either integrally formed or separately fabricated and subsequently rigidly interconnected side, end and bottom walls (see Figs. 3 and 4A-B). The base structure also comprises a separate top lid 130 that is simply placed on or alternatively attached to upper edges (see Figs. 4A-B) of the base structure 120 after assembly.

The walls of the base structure 120 delimit one internal volume 104-106 that by means of divider walls 127, 128 is divided into a central waste storage tank 103, with a tank waste collection volume 104, as well as service spaces 105, 106 at each short side of the waste storage tank 103. Thus, parts of the side and bottom walls of the base structure 120 constitute side and bottom walls, respectively of the waste storage tank 103, whereas a part of the lid 130 constitutes an upper wall of the waste storage tank 103. The divider walls 127, 128 each form an end wall of the waste storage tank 103 and, inside the structure 120, separate the waste collection volume 104 of the waste storage tank 103 from the service spaces 105, 106. The tank waste collection volume 104 communicates, through the lid 130, with one or several of the conventional types of waste chutes 112. A central portion 125A of a bottom wall 125 of the base structure 120, underlying the waste storage tank 103, is preferably strengthened to provide sufficient support for waste stored in the waste storage tank 103. One service space 105 accommodates an outwardly converging outlet section 103A of the waste storage tank 103. The outlet section 103A is connected to an outlet pipe 131 and then to the fixed transport pipe system 109 or 109' through a conventional waste discharge valve 107. Thus, this outlet side service space 105 provides access for service personnel to the discharge valve 107 and normally to control equipment for controlling the operation of the waste storage tank 103 and its auxiliary equipment.

The waste storage tank 103 is illustrated as a "screw agitator tank" 103 having a waste agitating and/or feeding means that is here schematically illustrated as a rotating screw type agitator 108. In such a facility the agitator screw 108 is supported in one of the divider walls 128 that may preferably be reinforced at its lower part in order to provide firm support for the agitator 108. In this "screw agitator type tank" a further service space 106 is required for accommodating the motor or drive unit 108A of the agitator 108 and possible control equipment therefore. Access to the service spaces 105, 106 through the ground G is provided through conventional manhole structures (not illustrated) and associated openings (see Fig. 6) in the lid 130. In the applicable case, lead-throughs for electric supply and/or control cables are provided in the lid 130 or in side or end walls, but they are not specifically shown in the drawings.

In the waste collection and temporary storage facility 100, as described, the provision of the base structure 120 that combines or integrally forms the conventional cistern or bunker as well as the tank, results in an excellent use of its inner volume. Specifically, the full cross section of the base structure 120 may be used as waste collection volume 104 for the waste storage tank 103, and in addition the remaining inner volume of the base structure 120 may be very efficiently used for the service spaces 105, 106. Accordingly, for a specified waste storage capacity of the waste storage tank 103 the proposed waste collection and storage facility 100 may be designed with significantly reduced outer dimensions compared to the conventional cistern and tank combination. This in turn means that the costs for manufacturing, assembling and transporting the inventive facility 100 as well as the excavation costs therefore in an underground application, will be approximately only one third of the costs for a prior art design of the corresponding waste storage capacity. Expressed otherwise, performed calculations imply that the costs involved for producing, assembling and installing a prior art cistern and tank combination having a waste storage capacity of 2 m³ will equal the corresponding costs for a waste collection and temporary storage facility 100 of the invention, having a waste storage capacity of 6 m³.

Figs. 3 and 4A-C illustrate a first practical, presently preferred embodiment of a waste collection and temporary storage facility 200 of the invention, whereas Fig. 5 illustrates said embodiment of the facility as installed in a partially and very schematically shown exemplary waste collection system. In said embodiment the base structure 220 of the facility 200 is a prefabricated concrete structure having integrally cast side 221, 222, end 223, 224 and bottom 225 walls and a separately cast lid 230 that is bolted or otherwise connected to upper edges 226A at an open top 226 of the base structure 220 after complete assembly of the facility 200. Such an integral casting of the walls 221-225 is normally preferred over an alternative separate casting and subsequent interconnection of such walls, partly since it simplifies and lowers the cost for producing the base structure and partly since it will improve the water tightness of the completed structure 220 against leakage of surrounding water into the structure, especially in underground applications.

The middle sections of the side walls 221, 222 form the respective sides of the tank 203 and are therefore inclined so as to converge slightly towards the bottom wall 225. This will provide the desired conventional tank shape, tapering generally downwardly towards a tank bottom. The middle section 225A (Fig. 5) of the bottom wall 225 of the structure 220 forms the bottom of the tank 203. Said middle section 225A of the bottom wall 225 is cast in thicker concrete than the remaining bottom wall sections and the other walls of the structure 220. This will provide the required strength for the tank bottom to support the deposited waste, while still reducing the overall material costs and maintaining a low weight for the structure.

In this embodiment of the facility 200, the tank 203 is likewise illustrated as having a rotary screw agitator 108 supported for rotation close to the bottom 225 of the tank 203 and being rotated by a drive unit 208A. In such a facility 200 two divider walls 227, 228 are required to form two service spaces 205, 206 at each short end of the structure 220. A first divider wall 227 is attached to the inside of the base structure 220 delimiting an outlet service space 205 therein. The outlet service space 205 accommodates a tapered tank outlet section 203A for connection to a transport pipe of the waste collection system through a straight outlet pipe 231 and an outlet or discharge valve 207. The tank outlet section 203A is preferably bolted tight to the divider wall 227, surrounding an outlet opening (not specifically illustrated) in the lower portion thereof. A second divider wall 228 is attached to the inside of the base structure 220 delimiting a service space 206 for an agitator drive unit 208A therein. The agitator drive unit 208A and the agitator 208 are both supported by said second divider wall 228, the agitator being rotatably journalled in an opening (not specifically illustrated) therein by means of proper bearings (likewise not specifically illustrated).

The divider walls 227, 228 extend the full width between the side walls 221, 222 of the base structure 220 and substantially from its bottom wall 225 to the upper edges 226A at the open top 226. They are each made of steel plate, such as of hot-dipped galvanized steel or of a suitable stainless steel grade. For further weight reduction, the divider walls 227, 228 are preferably made from relatively thin plate and the lower portion of the second divider plate 228 is reinforced to withstand the load from the agitator 208 and drive unit 208A. In the preferred embodiment the divider walls 227, 228 are bolted to the base structure 202, such as at the steps formed in the bottom wall 225, by the thicker cast middle section thereof, as well as in the side walls 221, 222, by the inclined middle sections thereof. In an alternative, but probably more time consuming and expensive solution, grooves (not shown) may be formed in the concrete, in the inner surface of the side walls, and the divider walls may be slid into position in the grooves.

In the middle section of at least one 221 of the side walls of the concrete structure 220 is also formed an auxiliary air channel 229 that extends from an air outlet end 229B opening into the waste storage tank 203, close to the outlet end divider wall 227, and to an air inlet end 229A opening into the agitator drive unit service space 206. The cast channel 229 is open towards the tank waste collection volume 204 and is closed up to the outlet 229B by a cover plate 229C (Fig. 4A) that is bolted to the side wall 221. In other words, air that is required to properly empty the tank is taken from said service space 206 and is introduced into the tank 203 near its outlet end. In Fig 4A is also indicated that the channel 229 preferably extends all the way towards and into the bottom wall 225 of the structure 220 to provide an appropriate air supply.

In order to enable complete service and repair of an installed underground facility 200 through manholes of reasonable size, the divider walls 227, 228 are preferably formed by separate connected sections that are schematically indicated in Fig. 6, and the tank outlet section 203A likewise consists of separate removably interconnected sections, as is illustrated in Figs. 5 and 6.

In the illustrated embodiment, the assembled facility 200 is provided with inlet and outlet pipe sections 232 and 231, respectively, that are cast into or alternatively connected to the concrete base structure 220 through openings 232B and 231B, respectively, formed in the lid 230 and the outlet end wall 223, respectively. Lead-throughs for electric supply and/or control cables are not illustrated in the drawing, but are likewise prefabricated in the base structure 220 during casting. Thereby, the prefabricated facility 200 may be quickly installed and connected to a waste collection system. The inlet chute 212 and the transport pipe of the system are connected through simple flange couplings 232A and 231A, respectively.

With reference specifically to Fig. 6, a method of producing a presently preferred, second practical embodiment of the waste collection and temporary facility 300 according to the invention will now be described. This embodiment basically corresponds to the first practical embodiment but some of the parts of the facility 300 have been modified, as will become obvious from the following description. In a first step, the complete base structure 320 with the appropriate cable lead-throughs and the outlet pipe 331 through opening 331B is integrally cast by means of formwork and in a conventional way that requires no detailed description. In another, parallel or subsequent step, the separate lid 330 is similarly cast with at least one manhole opening 340, two in this embodiment having two service spaces, an inlet pipe 332 through opening 332B and possible cable lead-throughs. In this embodiment the lid 330 is formed of three separate sections 330A-C that are individually connectable to the base structure 320. The divider walls 327, 328 that are here illustrated as consisting of three separate sections each, are then introduced into the interior of the base structure 320 and are bolted in position, as described above.

In this embodiment, the air channel is formed by an air channel plate structure 329C that is likewise bolted to a side wall 321 of the base structure 320, near its open top 326. A pipe 355 for allowing secure lead through of cables between the service spaces is also installed in upper bores 356, 357 in the divider plates 327, 328. Next, the agitator 308 and its drive unit 308A are mounted to the strengthened lower portion of the second divider wall 328 and the tank outlet section 303A with the discharge valve 307 is bolted to the first divider wall 327. The illustrated screw type agitator 308 is supported close to the bottom wall 325 of the base structure 320, and for adaption thereto the middle portion 325A of the bottom wall 325 is preferably rounded to follow the outer circumference of the agitator. The outlet pipe section 331 is introduced into the through opening 331B in the end wall 323 of the structure 320 and is connected to the tank outlet section 303A via discharge valve 307 and possibly also to the tank end wall 323. Then the inlet pipe section 332 is likewise introduced into the through opening 332B in the lid 330 and is fixed to said lid 330. Finally, the prefabricated facility 300 is completed by placing the lid 330 sections 330A-C onto the open end 326 of the base structure 320 and preferably fixing them to the upper edges 326A thereof by appropriate means, such as bolts.

The corresponding prefabricated facility 300, as illustrated in Fig. 3, may now be transported as a complete unit to the installation site, ready for connection to a waste collection system. In an underground application a simple excavation is prepared in advance and the facility 300 is lifted in position in the excavation. The facility 300 is then ready for use when the outlet pipe section 331 has been connected to the system transport pipe, the inlet pipe section 332 has been connected to a waste insertion chute and the necessary electric and/or control cables have been connected through the prepared lead-throughs. In this manner the waste collection and temporary storage facility may be installed in extremely short time and with a minimum of installation effort at the installation site.

Although the invention has been described and illustrated with specific reference to practical embodiments thereof as well as to exemplary applications thereof, the invention is in no way restricted to such embodiments or to such applications. The basic principles of the invention may therefore be applied to any type of vacuum operated waste collection systems where a temporary storage space is required and in underground applications as well as in applications above ground.

In alternative, but not specifically illustrated embodiments of the invention variations of the different illustrated parts of the facility may be employed without departing from the scope of the invention as defined in the appended claims. One example thereof is the use of a different kind of agitator/conveyor than the illustrated screw conveyor type. Therefore, the invention likewise covers applications using other kinds of present and future agitators for assisting emptying of the waste from the tanks by means of vacuum pressure. Such optional agitators may include any appropriate type of linear or rotating conveying or feeding means providing a desired loosening and/or forwardly conveying action for the collected and stored waste.

In other feasible alternative solutions that are likewise encompassed by the invention, the base structure may be formed of other material than concrete, such as a suitable synthetic resin material, and may also be formed of separately cast concrete or synthetic resin side, end and bottom walls that are firmly interconnected and sealed to each other by means of bolts and/or adhesive to form the prefabricated structure.

The invention has been described in connection with what is presently considered the most practical and preferred embodiments, but it is to be understood that the invention is not limited to the disclosed embodiments. The invention is therefore intended to cover various modifications and equivalent arrangements included within the scope of the appended claims.

## Claims

1. A waste collection and temporary storage facility (100; 200; 300) for a vacuum operated waste collection system (102), including a waste storage tank (103; 203) having a waste collection volume (104; 204), a waste agitating and/or feeding means (108; 208; 308) provided in the waste collection volume (104; 204), at least one service space (106; 206) separated from said waste collection volume (104;204) a base structure (120; 220; 320) delimiting the waste storage tank (103; 203) and its waste collection volume (104; 204) as well as the at least one service space (106; 206) and at least one divider wall (128; 228; 328) forming an end wall of the waste storage tank (103; 203) and separating, inside the base structure (120; 220; 320) the waste collection volume (104; 204) from the at least one service space (106; 206) **characterized by** a further divider wall (127; 227; 327) attached to the inside of the base structure (120; 220; 320) delimiting an outlet service space (105; 205) therein containing a outlet section (103A; 203A; 303A) of the waste storage tank (103; 203) for connection to a transport pipe (109; 109') of the vacuum operated waste collection system (102) and an outlet valve (107; 207; 307).

2. The waste collection and temporary storage facility (100; 200; 300) according to claim 1, **characterized in that** the waste storage tank (103; 203) is provided with a rotating agitator (108; 208; 308) supported for rotation close to a bottom wall (125; 225; 325) of the waste storage tank (103; 203) and being rotated by a drive unit (108A; 208A; 308A), whereby the at least one divider wall (128; 228: 328) is attached to the inside of the base structure (120; 220; 320) and the drive unit (108; 208A; 308A) as well as the rotating agitator (108; 208; 308) are supported in said at least one divider wall (128; 228; 328).

3. The waste collection and temporary storage facility (100; 200; 300) according to claim 1 or 2, **characterized in that** the base structure (120; 220; 320) has integrally cast or alternatively rigidly connected side (221,222; 321, 322), end (223, 224; 323, 324) and bottom (125; 225; 325) walls, whereby parts of the side and bottom walls constitute side and bottom walls, respectively of the waste storage tank (103; 203) and form an open top (226; 326) and that a separate lid (130; 230; 330, 330A-C) is placed on or alternatively attached to upper edges (226A; 326A) of the base structure (120; 220; 320), a part of the lid constituting an upper wall of the waste stowage tank (103; 203).

4. The waste collection and temporary storage facility (100; 200; 300) according to claim 3, **characterized in that** the at least one divider wall (128; 228; 328) is attached to an inside of the base structure (120; 220; 320), extending the full width between the side walls (221, 222; 321, 322) and substantially from the bottom wall (125; 225; 325) to upper edges (226A; 326A) at the open top (226; 326).

5. The waste collection and temporary storage facility (100; 200; 300) according to any of claims 1-4, **characterized by** an air inlet channel (229) formed in one of the side walls (221, 222; 321, 322) of the base structure (220; 320), said air inlet channel (229) opening at one end (229B) into the waste storage tank (203) and at the other end (229A) opening into one of the at least one service spaces (205, 206).

6. The waste collection and temporary storage facility (200; 300) according to any of claims 1-5, **characterized in that** the base structure (220; 320) consists of concrete.

7. The waste collection (100; 200; 300) facility (100; 200; 300) according to any of claims 1-6, **characterized in that** the divider walls (127, 128; 227, 228; 327, 328) consist of steel plate.

## Patentansprüche

1. Müll-Sammel- und Zwischenlagereinrichtung (100; 200; 300) für ein unterdruckbetriebenes Müll-Sammelsystem (102), beinhaltend einen Müll-Lagerbehälter (103; 203), der einen Müll-Sammelraum (104; 204), ein in dem Müll-Sammelraum (104; 204) angeordnetes Müll-Rühr- und/oder Beschickungsmittel (108; 208; 308), mindestens einen von dem Müll-Sammelraum (104; 204) getrennten Betriebsraum (106; 206), einen Grundaufbau (120; 220; 320), der den Müll-Lagerbehälter (103; 203) und seinen Müll-Sammelraum (104; 204) sowie den mindestens einen Betriebsraum (106; 206) und mindestens eine Trennwand (128; 228; 328) begrenzt, die eine End-Wand des Müll-Lagerbehälters (103; 203) ausbildet und innerhalb des Grundaufbaus (120; 220; 320) den Müll-Sammelraum (104; 204) von dem mindestens einen Betriebsraum (106; 206) trennt, **gekennzeichnet durch** eine weitere Trennwand (127; 227; 327), die an der Innenseite des Grundaufbaus (120; 220; 320) einen Auslassbetriebsraum (105; 205) begrenzend befestigt ist, darin enthaltend einen Auslassbereich (1 03A; 203A; 303A) des Müll-Lagerbehälters (103; 203) zur Verbindung mit einem Transportrohr (109; 109`) des unterdruckbetriebenen Müll-Sammelsystems (102) und einem Auslassventil (107; 207; 307).

2. Müll-Sammel- und Zwischenlagereinrichtung (100; 200; 300) nach Anspruch 1, **dadurch gekennzeichnet, dass** der Müll-Lagerbehälter (103; 203) mit einem rotierenden Rührwerk (108; 208; 308) versehen ist, das zum Rotieren nahe einer unteren Wand (125; 225; 325) des Müll-Lagerbehälters (103; 203) gelagert ist und von einer Antriebseinheit (1 08A; 208A; 308A) gedreht wird, wobei die mindestens eine Trennwand (128; 228; 328) an der Innenseite des Grundaufbaus (120; 220; 320) befestigt ist und sowohl die Antriebseinheit (108A; 208A; 308A) als auch das rotierende Rührwerk (108; 208; 308) in der mindestens einen Trennwand (128; 228; 328) gelagert sind.

3. Müll-Sammel- und Zwischenlagereinrichtung (100; 200; 300) nach Anspruch 1 oder 2, **dadurch gekennzeichnet, dass** der Grundaufbau (120; 220; 320) angegossene oder alternativ starr verbundene seitliche (221; 222; 321; 322), End- (223; 224; 323; 324) und untere (125; 225; 325) Wände aufweist, wobei Teile der seitlichen und unteren Wände jeweils seitliche und untere Wände des Müll-Lagerbehälters (103; 203) bilden und ein offenes oberes Ende (226; 326) bilden, und dass ein separater Deckel (130; 230; 330; 330A-C) an oberen Rändern (226A; 326A) des Grundaufbaus (120; 220; 320) angeordnet oder alternativ befestigt ist, wobei ein Teil des Deckels eine obere Wand des Müll-Lagerbehälters (103; 203) bildet.

4. Müll-Sammel- und Zwischenlagereinrichtung (100; 200; 300) nach Anspruch 3, **dadurch gekennzeichnet, dass** die mindestens eine Trennwand (128; 228; 328) an einer Innenseite des Grundaufbaus (120; 220; 320) befestigt ist und sich über die gesamte Breite zwischen den seitlichen Wänden (221; 222; 321; 322) und im Wesentlichen von der unteren Wand (125; 225; 325) zu den oberen Rändern (226A; 326A) an dem offenen oberen Ende (226; 326) erstreckt.

5. Müll-Sammel- und Zwischenlagereinrichtung (100; 200; 300) nach einem der Ansprüche 1 bis 4, **gekennzeichnet durch** einen Lufteinlasskanal (229), der in einer der seitlichen Wände (221; 222; 321; 322) des Grundaufbaus (220; 320) ausgebildet ist, wobei der Lufteinlasskanal (229) sich an einem Ende (229B) in den Müll-Lagerbehälter (203) hinein öffnet und sich an dem anderen Ende (229A) in einen des mindestens einen Betriebsraums (205; 206) öffnet.

6. Müll-Sammel- und Zwischenlagereinrichtung (200; 300) nach einem der Ansprüche 1 bis 5, **dadurch gekennzeichnet, dass** der Grundaufbau (220; 320) aus Beton besteht.

7. Müll-Sammel- und Zwischenlagereinrichtung (200; 300) nach einem der Ansprüche 1 bis 6, **dadurch gekennzeichnet, dass** die Trennwände (127; 128; 227; 228; 327; 328) aus Stahlblech bestehen.

## Revendications

1. Installation de collecte et de stockage temporaire des déchets (100 ; 200 ; 300) pour un système de collecte des déchets fonctionnant sous vide (102), comprenant un réservoir de stockage des déchets (103 ; 203) ayant un volume de collecte des déchets (104 ; 204), un moyen d'agitation et/ou d'acheminement des déchets (108 ; 208 ; 308) agencé dans le volume de collecte des déchets (104 ; 204), au moins un espace de service (106 ; 206) séparé dudit volume de collecte des déchets (104 ; 204), une structure de base (120 ; 220 ; 320) délimitant le réservoir de stockage des déchets (103 ; 203) et son volume de collecte des déchets (104 ; 204) ainsi que ledit au moins un espace de service (106 ; 206) et au moins une paroi de séparation (128 ; 228 ; 328) formant une paroi d'extrémité du réservoir de stockage des déchets (103 ; 203) et séparant, à l'intérieur de la structure de base (120 ; 220 ; 320), le volume de collecte des déchets (104 ; 204) dudit au moins un espace de service (106 ; 206), **caractérisée par** une paroi de séparation supplémentaire (127 ; 227 ; 327) attachée à l'intérieur de la structure de base (120 ; 220 ; 320) délimitant un espace de service de refoulement (105 ; 205) à l'intérieur contenant une section de refoulement (103A ; 203A ; 303A) du réservoir de stockage des déchets (103 ; 203) pour raccordement à un tuyau de transport (109 ; 109') du système de collecte des déchets fonctionnant sous vide (102) et une vanne de refoulement (107 ; 207 ; 307).

2. Installation de collecte et de stockage temporaire des déchets (100 ; 200 ; 300) selon la revendication 1, **caractérisée en ce que** le réservoir de stockage des déchets (103 ; 203) est doté d'un agitateur rotatif (108 ; 208 ; 308) supporté pour une rotation à proximité d'une paroi inférieure (125 ; 225 ; 325) du réservoir de stockage des déchets (103 ; 203) et étant mis en rotation par une unité d'entraînement (108A ; 208A ; 308A), moyennant quoi ladite au moins une paroi de séparation (128 ; 228 ; 238) est attachée à l'intérieur de la structure de base (120 ; 220 ; 320) et l'unité d'entraînement (108A ; 208A ; 308A) ainsi que l'agitateur en rotation (108 ; 208 ; 308) sont supportés dans ladite au moins une paroi de séparation (128 ; 228 ; 328).

3. Installation de collecte et de stockage temporaire des déchets (100 ; 200 ; 300) selon la revendication 1 ou 2, **caractérisée en ce que** la structure de base (120 ; 220 ; 320) comprend des parois latérales (221, 222 ; 321, 322), d'extrémité (223, 224 ; 323, 324) et inférieures (125 ; 225 ; 325) moulées solidairement ou en variante raccordées de façon rigide, moyennant quoi des parties des parois latérales et inférieures constituent des parois latérales et inférieures, respectivement du réservoir de stockage des déchets (103 ; 203) et forment un sommet ouvert (226 ; 326), et **en ce qu'**un couvercle séparé (130 ; 230 ; 330 ; 330A à C) est placé sur ou en variante attaché à des bords supérieurs (226A ; 326A) de la structure de base (120 ; 220 ; 320), une partie du couvercle constituant une paroi supérieure du réservoir de stockage des déchets (103 ; 203).

4. Installation de collecte et de stockage temporaire des déchets (100 ; 200 ; 300) selon la revendication 3, **caractérisée en ce que** ledit au moins une paroi de séparation (128 ; 228 ; 328) est attachée à un intérieur de la structure de base (120 ; 220 ; 320), dont la largeur entière s'étend entre les parois latérales (221, 222 ; 321, 322) et sensiblement à partir de la paroi inférieure (125 ; 225 ; 325) jusqu'aux bords supérieurs (226A ; 326A) au niveau du sommet ouvert (226 ; 326).

5. Installation de collecte et de stockage temporaire des déchets (100 ; 200 ; 300) selon les revendications 1 à 4, **caractérisée par** un canal d'admission d'air (229) formé dans une des parois latérales (221, 222 ; 321, 322) de la structure de base (220 ; 320), ledit canal d'admission d'air (229) s'ouvrant à une extrémité (229B) dans le réservoir de stockage des déchets (203) et à l'autre extrémité (229A) s'ouvrant dans un dudit au moins un espace de service (205, 206).

6. Installation de collecte et de stockage temporaire des déchets (200 ; 300) selon l'une quelconque des revendications 1 à 5, **caractérisée en ce que** la structure de base (220 ; 320) est constituée de béton.

7. Installation de collecte et de stockage temporaire des déchets (100 ; 200 ; 300) selon l'une quelconque des revendications 1 à 6, caractérisée en ce queles parois de séparation (127, 128 ; 227, 228 ; 327, 328) sont constituées de tôle d'acier.
